# EUROPÄISCHE PATENTSCHRIFT

(11) **EP 2 580 409 B1**
(45) Veröffentlichungstag und Bekanntmachung des Hinweises auf die Patenterteilung: **23.11.2016**
(21) Anmeldenummer: 11728210.3
(22) Anmeldetag: 10.06.2011
(51) Int. Cl.: F03D 80/00, E04H 12/12, F03D 1/00

(54) **TURM EINER WINDENERGIEANLAGE SOWIE VERFAHREN ZUR HERSTELLUNG EINES TURMS EINER WINDENERGIEANLAGE**
TOWER OF A WIND POWER PLANT AND METHOD FOR PRODUCING A TOWER OF A WIND POWER PLANT
MÂT D'ÉOLIENNE ET PROCÉDÉ DE FABRICATION D'UN MÂT D'ÉOLIENNE

(30) Priorität: 04.05.2011 WO PCT/EP2011/057088; 26.08.2010 DE 102010039796; 14.06.2010 DE 102010030047
(43) Veröffentlichungstag der Anmeldung: 17.04.2013
(73) Patentinhaber: Max Bögl Stiftung & Co. KG, 92369 Sengenthal (DE)
(72) Erfinder: BÖGL, Stefan, 92369 Sengenthal (DE); HIERL, Martin, 92318 Neumarkt (DE); KNITL, Josef, 92342 Freystadt (DE)
(74) Vertreter: Bergmeier, Werner
(86) Internationale Anmeldenummer: PCT/EP2011/059713
(87) Internationale Veröffentlichungsnummer: WO 2011/157659

(56) Entgegenhaltungen:
- WO-A1-2004/007955
- DE-A1-102008 015 838
- DE-A1-102008 016 828
- DE-U1-202010 000 169
- JP-A- 9 248 745
- US-A1- 2009 031 639

## Beschreibung

Die vorliegende Erfindung ist ein Verfahren zur Herstellung eines Turms, insbesondere eines Turms einer Windenergieanlage, bei welchem zumindest ein rohrförmiger Turmabschnitt aus aufeinander angeordneten ringförmigen Betonfertigteilen mit zwei horizontalen Kontaktflächen hergestellt wird. Weiterhin betrifft die Erfindung einen Turm, insbesondere einen Turm für eine Windenergieanlage, mit zumindest einem rohrförmigen Turmabschnitt aus Beton, welcher aus aufeinander angeordneten ringförmigen Betonfertigteilen mit zwei horizontalen Kontaktflächen ausgebildet ist.

Türme für Windenergieanlagen werden aus in einem Fertigteilwerk vorgefertigten Betonfertigteilen aufgebaut. Nach einem üblichen Verfahren des Stands der Technik werden die Betonfertigteile nach ihrer Herstellung an den Einbauort transportiert und dort durch Aufeinandersetzen zu einem Turm zusammengefügt, wobei die Betonfertigteile zunächst zueinander ausgerichtet werden müssen. Zwischen die Fertigteile wird hierbei ein Vergussmittel eingebracht, um die großen Fertigungstoleranzen der Betonfertigteile, welche bei großen Teilen wie vorliegend in der Regel mehrere Millimeter betragen, auszugleichen. Weiterhin ist ein Vergussmittel in der Fuge zwischen den Fertigteilen erforderlich, um eine Abdichtung des Turms herzustellen. Nachteilig ist hierbei, dass der Aufbau durch das Ausrichten der Teile sowie das Einbringen und Abbinden des Vergussmittels aufwändig ist und eine längere Zeitdauer in Anspruch nimmt. Weiterhin ist die Herstellung des Turms am Einbauort nur unter günstigen Witterungsbedingungen möglich.

Die JP 9 248745 A beschreibt ein Verfahren zur Herstellung eines Turms bzw. eines Behälters aus aufeinander angeordneten, ringförmigen Betonfertigteilen mit zwei horizontalen Kontaktflächen. Die Betonfertigteile werden in einer Schalung gegossen, so dass die untere Kontaktfläche eine ausreichende Ebenheit aufweist. Die obere Kontaktfläche kann jedoch aufgrund ihrer mangelnden Ebenheit zu einem Klappern und zu Behinderungen im Aufbau des Turmes führen. Die Schrift schlägt daher vor, die Betonringe mit der unteren Kontaktfläche auf einen Drehtisch einer Bearbeitungsstation zu setzen und die obere Kontaktfläche zu überarbeiten, so dass anschließend auch diese eine für den vorgesehen Verwendungszweck ausreichende Ebenheit aufweist. Die Parallelität der beiden Kontaktflächen ist dabei nicht unbedingt gegeben.

Die DE 10 2008 016 828 A1 schlägt ein verbessertes Verfahren zum Herstellen von Betonfertigteilen für Windenergieanlagen vor. Hierbei wird das Betonfertigteil in einer Gießform mit einem planebenen Boden hergestellt, so dass die Unterseite des Betonfertigteils sehr exakt hergestellt werden kann. Auf die Oberseite des Betonfertigteils wird eine Schicht aus Epoxidharz aufgebracht, welche nach dem Aushärten parallel zur Unterseite überfräst wird. Die Gießform muss hierbei für die Herstellung der planebenen Unterseite bereits sehr exakt sein, so dass die Formherstellung vergleichsweise aufwändig ist. Weiterhin muss die Frässtation eine exakt eingerichtete Aufnahme für das Betonfertigteil bereitstellen.

Aufgabe der vorliegenden Erfindung ist es, einen Turm sowie ein Verfahren zur Herstellung eines Turms aus Betonfertigteilen vorzuschlagen, welche in einfacher Weise einen schnellen Aufbau des Turms ermöglichen.

Die Aufgabe wird gelöst mit den Merkmalen der unabhängigen Ansprüche.

Bei einem Verfahren zur Herstellung eines Turms, insbesondere eines Turms einer Windenergieanlage, wird zumindest ein rohrförmiger Turmabschnitt aus aufeinander angeordneten ringförmigen Betonfertigteilen mit zwei horizontalen Kontaktflächen hergestellt. Erfindungsgemäß werden die ringförmigen Betonfertigteile nach dem Gießen in einer Bearbeitungsstation im Fertigteilwerk aufgespannt und die beiden horizontalen Kontaktflächen der Betonfertigteile werden in einer Aufspannung materialabtragend planparallel bearbeitet. Die horizontalen Kontaktflächen aus Beton werden hierbei direkt überarbeitet, so dass das zusätzliche Aufbringen einer Ausgleichsschicht auf die Kontaktflächen entfallen kann. Das aufwändige Herstellen einer sehr exakten Gießform ist ebenfalls nicht erforderlich, da die horizontalen Kontaktflächen erst nach Abschluss des Gießprozesses exakt überarbeitet werden.

Ein Turm, insbesondere ein Turm einer Windenergieanlage, weist zumindest einen rohrförmigen Turmabschnitt aus Beton auf, welcher aus aufeinander angeordneten ringförmigen Betonfertigteilen mit zwei horizontalen Kontaktflächen ausgebildet ist. Die beiden horizontalen Kontaktflächen der Betonfertigteile sind erfindungsgemäß mit einer Parallelitätsabweichung und einer Ebenheitsabweichung von nur wenigen Zehntelmillimetern, vorzugsweise von weniger als 0,2 mm, materialabtragend planparallel überarbeitet. Die Ausbildung von Betonfertigteilen mit derart geringen Toleranzen ermöglicht einen schnellen Aufbau des Turms durch einfaches Aufeinandersetzen der Bauteile. Aufgrund der geringen Toleranzen sind beim Aufbau keinerlei Ausrichtungs- und Ausgleichsarbeiten mehr erforderlich, es muss lediglich die Zentrierung der aufeinander gesetzten in der Regel ringförmigen Betonfertigteile gewährleistet werden. Die Einhaltung derart geringer Toleranzen bei Betonfertigteilen mit einem Gewicht von mehreren Tonnen und Abmessungen von mehreren Metern ist durch die Überarbeitung der beiden Kontaktflächen in derselben Aufspannung in günstiger Weise möglich.

Vorteilhaft ist es, wenn die Betonfertigteile mit einer Parallelitätsabweichung und einer Ebenheitsabweichung von wenigen Zehntelmillimetern, vorzugsweise von weniger als 0,2 mm, überschliffen werden. Mit einem Schleifverfahren können die gewünschten Genauigkeiten besonders gut hergestellt werden, wobei Toleranzen im Bereich von 0,1 mm - 0,2 mm erreicht werden können.

Wird ein Turm aus überschliffenen Betonfertigteilen aufgebaut, so lassen sich aufgrund der sehr geringen Parallelitäts- und Ebenheitsabweichungen ohne weitere Maßnahmen und ohne Einsatz von Vergussmitteln trockene Fugen zwischen zwei aufeinander angeordneten Betonfertigteilen herstellen, welche bereits im ungespannten Zustand des Turms eine Breite von weniger als 0,5 mm aufweisen. Sind die Betonfertigteile besonders exakt mit Abweichungen von nur 0,1 mm überschliffen, beträgt die Breite der Fugen im ungespannten Zustand weniger als 0,2 mm. Werden im Anschluss die Betonfertigteile des Turms durch Spannmittel gegeneinander verspannt und eine Vorspannung auf den Turm aufgebracht, so wird die Breite der Fugen noch weiter reduziert bzw. können die Betonfertigteile fugenlos miteinander verbunden werden.

Besonders vorteilhaft ist es hierbei, wenn die Betonfertigteile mittels externer, im Inneren des Turms verlaufender Spannglieder verspannt sind. Die Fertigung der Betonfertigteile ist hierdurch vereinfacht, da keine Hüllrohre für die Spannmittel vorgesehen werden müssen. Auch bleiben die Spannglieder für Kontrollzwecke und Wartungsarbeiten zugänglich.

Werden die Fugen trocken, d. h. ohne das Aufbringen eines Vergussmittels oder einer Ausgleichsmasse zwischen den Betonfertigteilen am Einbauort ausgeführt, so ist der Aufbau des Turms besonders einfach und schnell zu bewerkstelligen. Eine Abdichtung der Fugen ist durch die hochwertige Ausführung der Kontaktflächen nicht erforderlich, da durch das Verspannen der Betonfertigteile die Fugen vollständig beseitigt werden können.

Zur Herstellung der Betonfertigteile mit exakt planparallelen horizontalen Kontaktflächen ist es vorteilhaft, wenn die ringförmigen Betonfertigteile während der Bearbeitung um ihre vertikale Achse gedreht werden. Die Bearbeitung der horizontalen Kontaktflächen in derselben Aufspannung wird hierdurch in einfacher Weise ermöglicht. Besonders vorteilhaft ist hierbei, dass auch bei einer weniger exakten Lagerung des Betonfertigteils dennoch hochgenaue und parallele Kontaktflächen erzeugt werden können.

Weiterhin ist es vorteilhaft, wenn die ringförmigen Betonfertigteile in liegender Aufspannung, also in ihrer späteren Einbaulage, auf einem Drehtisch bearbeitet werden. Insbesondere bei konischen oder parabelförmigen Betonfertigteilen kann hierdurch die Lagerung der Betonfertigteile auf dem Drehtisch in einfacher Weise realisiert werden.

Zur Aufspannung der Betonfertigteile auf einem Drehtisch weisen diese vorteilhafterweise eine Befestigungsvorrichtung auf. Diese ermöglicht eine sichere Aufnahme der Betonfertigteile und kann bereits in die Betonfertigteile eingegossen sein oder durch eine Aussparung im Beton gebildet sein. Beispielsweise können als Befestigungsvorrichtungen Muttern eingegossen werden, in welche eine Stahlkonsole eingreift.
Für die Herstellung von ringförmigen Betonfertigteilen mit einem großen Durchmesser ist es vorteilhaft, wenn die ringförmigen Betonfertigteile vor dem Überschleifen aus zwei oder mehreren Ringsegmenten zusammengesetzt und gesichert werden. Vorzugsweise werden die Betonfertigteile miteinander verschraubt oder verbolzt. Nach dem Überschleifen werden die Betonfertigteile für den Transport zum Einbauort wieder in Ringsegmente zerlegt. Die Ringsegmente können aufgrund ihrer, im Vergleich zu den vollständigen Ringen, kleineren Größe noch problemlos auf der Straße transportiert werden.

Bei einem Turm aus Betonfertigteilen sind die einzelnen Ringsegmente mittels einer Vergussmasse wieder zu einem ringförmigen Betonfertigteil zusammengesetzt. Da der Einsatz der Vergussmasse auf einen sehr kleine Bereich beschränkt ist, können die ringförmigen Betonfertigteile dennoch sehr schnell und witterungsunabhängig zusammengesetzt und montiert werden. Zusätzlich können die Betonsegmente noch miteinander verspannt oder verschraubt werden.

Bestehen die ringförmigen Betonfertigteile aus zwei oder mehreren Ringsegmenten, so ist es weiterhin vorteilhaft, wenn auch vertikale Kontaktfugen zwischen den Kontaktflächen der ringsegmentförmigen Betonfertigteile trocken ausgeführt werden. Die Ringsegmente werden hierbei in horizontaler Richtung vorzugsweise mittels diagonal angeordneter Spannelemente, beispielsweise mittels Schrauben, vorgespannt. Die Fuge kann jedoch auch ohne Verschraubung ausgebildet werden, wobei die vertikale Fuge ausschließlich durch die vertikale Verspannung des Turmabschnitts aus Beton zusammengehalten wird. Die Ringsegmente eines Rings werden hierbei bei aufeinanderfolgenden Ringen jeweils gegeneinander verdreht angeordnet.

Um die Abdichtung des Turms weiter zu verbessern, kann es jedoch auch vorteilhaft sein, ein Dichtprofil zwischen den horizontalen Kontaktflächen der Betonfertigteile vorzusehen. Die Betonfertigteile weisen hierzu an ihrer oberen horizontalen Kontaktfläche eine Ringnut für ein Dichtprofil auf. Die Ringnut wird nach dem Überschleifen in derselben Aufspannung in die obere horizontale Kontaktfläche der Betonfertigteile eingearbeitet. Vorzugsweise wird die Ringnut mittels einer Säge eingebracht.

Nach einer anderen vorteilhaften Weiterbildung der Erfindung weisen die Betonfertigteile an ihren Kontaktflächen wenigstens eine Ausnehmung, vorzugsweise wenigstens eine Bohrung auf. In diese ist dann jeweils ein Element zur Lage- und/oder Verdrehsicherung, beispielsweise ein Kunststoffdübel, einsetzbar. Vorzugsweise werden hierbei mehrere Bohrungen gleichmäßig über den Umfang verteilt.

Die Ausnehmungen bzw. Zentrierbohrungen werden nach dem Überschleifen vorzugsweise ebenfalls in derselben Aufspannung in die beiden horizontalen Kontaktflächen eingearbeitet.

Nach einer vorteilhaften Weiterbildung der Erfindung werden nach dem Überschleifen und/oder nach dem Einarbeiten der Ringnut und/oder der Ausnehmungen die Betonfertigteile mittels eines berührungslosen Messsystems vorzugsweise in derselben Aufspannung vermessen. Durch die Zusammenfassung mehrerer Bearbeitungsschritte in einer Bearbeitungsstation können die Betonfertigteile ohne Umlagerung hochpräzise hergestellt werden, wobei die Lagerung auf einem Drehtisch in günstiger Weise die Bearbeitung durch mehrere Werkzeuge sowie die Vermessung ermöglicht.

Weitere Vorteile der Erfindung werden anhand der nachfolgend dargestellten Ausführungsbeispiele beschrieben. Es zeigen:
- **Fig. 1**: eine Übersichtsdarstellung eines erfindungsgemäßen Turms mit einem Betonabschnitt, einem Stahlabschnitt sowie einem Adapterstück,
- **Fig. 2**: eine schematische Darstellung einer Bearbeitungsstation und der Bearbeitung der ringförmigen Betonfertigteile,
- **Fig. 3**: eine Schnittdarstellung eines Adapterstücks,
- **Fig. 4**: eine Darstellung eines ringförmigen Betonfertigteils für einen erfindungsgemäßen Turm, sowie
- **Fig. 5**: eine schematische Draufsicht auf ein ringförmiges Betonfertigteil für einen erfindungsgemäßen Turm.

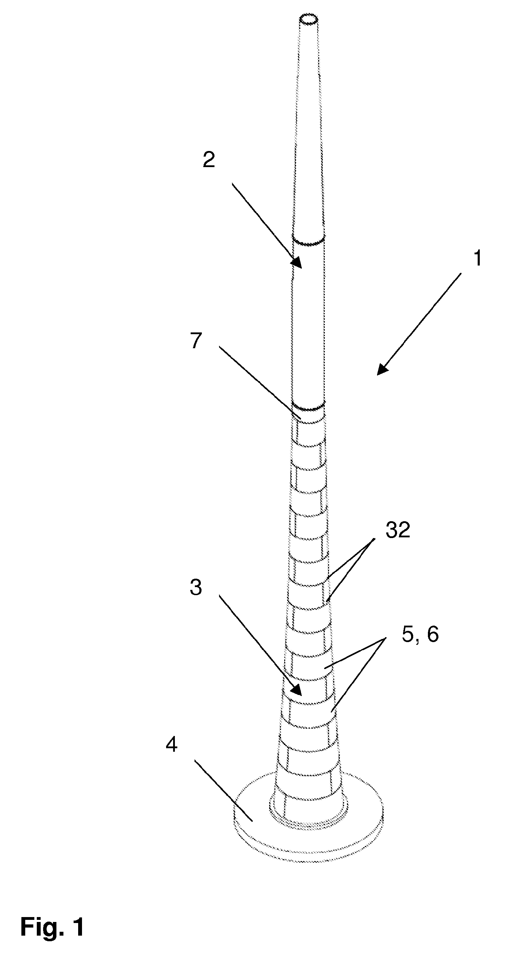

Fig. 1 zeigt einen Turm 1, beispielsweise für eine Windenergieanlage, in einer perspektivischen Übersichtsdarstellung. Der Turm 1 ist als Hybridturm ausgeführt, bei welchem ein unterer rohrförmiger Turmabschnitt 2 aus Beton und ein oberer rohrförmiger Turmabschnitt 3 aus Stahl vorgesehen ist. Weiterhin weist der Turm 1 einen Fußabschnitt 4 bzw. ein Fundament auf. An dem Turmabschnitt aus Stahl 3 sind in an sich bekannter Weise eine Maschinengondel und ein Rotor angeordnet, welche hier nicht dargestellt sind.

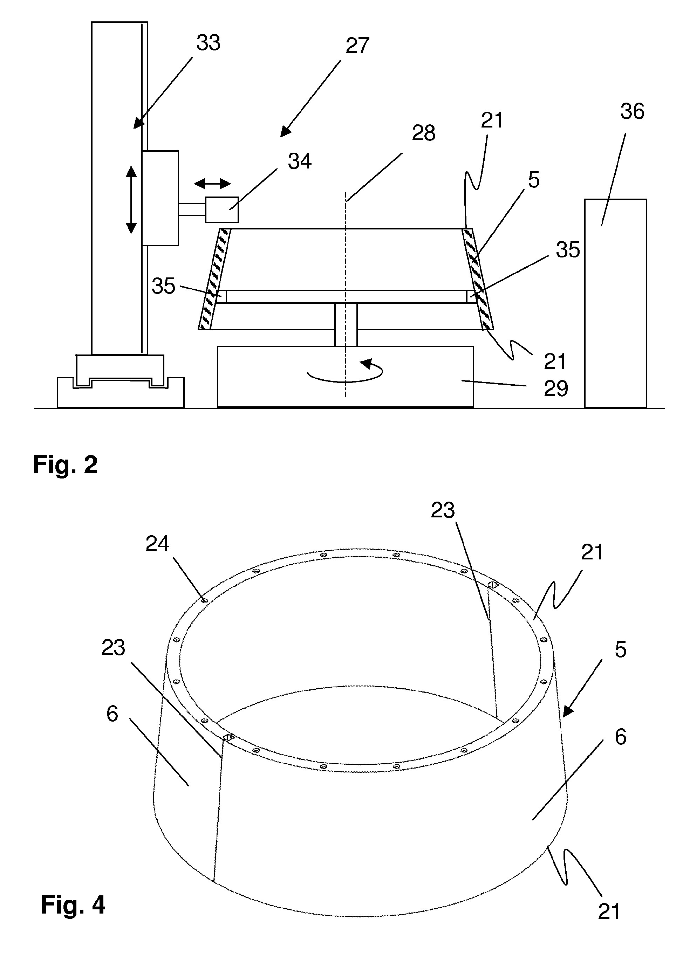

Der Turmabschnitt 2 aus Beton ist hierbei aus einzelnen, ringförmigen Betonfertigteilen 5 aufgebaut, welche vorliegend wiederum aus jeweils zwei Ringsegmenten 6 bestehen, wie aus Fig. 4 ersichtlich. Hierdurch können in günstiger Weise auch sehr große Türme, welche im Fußbereich einen sehr großen Durchmesser aufweisen, in Fertigteilbauweise hergestellt werden, da die einzelnen Fertigteile problemlos transportierbar sind. Der Turmabschnitt 3 aus Stahl kann einteilig vorgefertigt sein und an den Montageort verbracht werden oder ebenso aus mehreren Teilen bestehen, welche am Montageort, oder auch bereits zuvor, an einem Fertigungsort zusammengefügt werden. Um eine einfache und flexible Verbindung des Turmabschnitts 2 aus Beton und des Turmabschnitts 3 aus Stahl zu ermöglichen, ist ein Adapterstück 7 vorgesehen.

Die Betonfertigteile 5 des Turmabschnitts 2 aus Beton werden bei der Montage des Turmabschnitts 2 trocken aufeinandergesetzt und gegeneinander verspannt. Die Betonfertigteile 5 (siehe Fig. 4), welche vorliegend aus jeweils zwei Ringsegmenten 6 bestehen, weisen jeweils eine obere und eine untere horizontale Kontaktfläche 21 auf.

Fig. 2 zeigt eine Bearbeitungsstation 27, in welcher in einem Fertigteilwerk die gegossenen und ausgehärteten Betonfertigteile 5 materialabtragend überarbeitet werden. Die Bearbeitungsstation weist einen Drehtisch 29 auf, auf welchem die ringförmigen Betonfertigteile 5 aufgespannt werden. Die Bearbeitung erfolgt vorliegend durch eine Fahrständerschleifmaschine 33, welche an dem Drehtisch 29 positioniert ist und welche in allen drei Raumachsen einstellbar ist. Ein Schleifkopf 34 ist hierdurch sowohl der oberen als auch der unteren horizontalen Kontaktfläche 21 zustellbar, ohne dass eine erneute Aufspannung des Betonfertigteils 5 erforderlich ist. Der Drehtisch 29 verfügt über einen Antrieb, so dass die Betonfertigteile 5 während der Bearbeitung um ihre vertikale Achse 28 gedreht werden können. Hierdurch ist es möglich, in einer einzigen Aufspannung beide horizontalen Kontaktflächen 21 exakt planparallel zueinander zu überarbeiten.

Vorliegend beinhaltet das Betonfertigteil 5 Befestigungsvorrichtungen 35 für die Aufspannung am Drehtisch 29. Je nach Ausführung der Aufnahme des Drehtischs 29 können insbesondere die konischen Fertigteile 5 jedoch auch lediglich auf eine entsprechend geformte Aufnahme aufgelegt werden.

Durch die voneinander unabhängigen Fertigungsschritte Gießen des Betonfertigteils 5 und Herstellen der exakten horizontalen Kontaktflächen 21 können sich somit Fehler bzw. Toleranzen des Gießprozesses nicht auf die Ausbildung der Kontaktflächen 21 auswirken. Dadurch, dass beide horizontale Kontaktflächen 21 in einem Fertigungsschritt und in derselben Aufspannung durch Überarbeitung des Betonfertigteils 5 hergestellt werden, ist weiterhin ein aufwändiges Einrichten des Betonfertigteils 5 in der Bearbeitungsstation nicht erforderlich, da die Parallelität zwischen oberer und unterer Kontaktfläche 21 in jedem Fall gewährleistet ist. Sogar Winkelabweichungen in der Aufspannung wirken sich nicht auf den Aufbau des Turms 1 und die Fugenausbildung aus, da auch bei einer schrägen Aufspannung des Betonfertigteils 5 die Parallelität der beiden Kontaktflächen 21 gewährleistet werden kann.

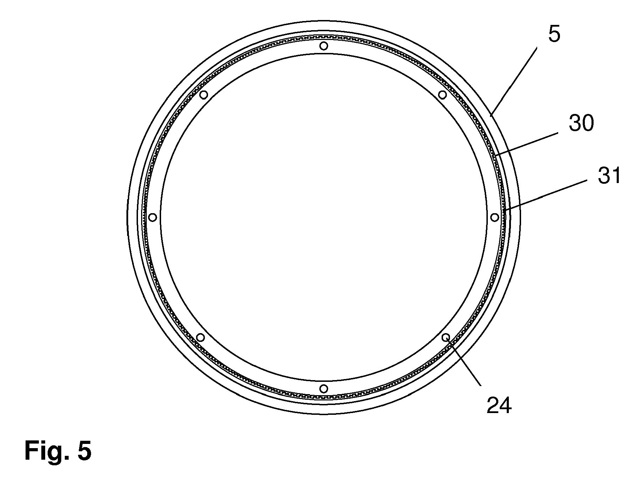

Durch die Überarbeitung mit einer Fahrständerschleifmaschine 33 können die Betonfertigteile 5 mit einer Genauigkeit von bis zu 0,1 mm - 0,2 mm überschliffen werden, so dass sich geringste Abweichungen bezüglich der Ebenheit und Parallelität ergeben. Durch die hochgenaue Überarbeitung der Betonfertigteile 5 durch Überschleifen beträgt die Breite der Fugen 32 zwischen den aufeinander angeordneten Betonfertigteilen 5 weniger als 0,5 mm, vorzugsweise lediglich 0,2 mm. Der Turm 1 kann daher am Einbauort ohne aufwändige Einstellarbeiten und ohne das Vorsehen einer Ausgleichsmasse zwischen den einzelnen Betonfertigteilen 5 durch einfaches Aufeinandersetzen der Betonfertigteile 5 aufgebaut werden. Nachdem die gewünschte Turmhöhe erreicht ist, werden die aufeinander angeordneten Betonfertigteile 5 durch Spannglieder vorgespannt, so dass die Fugenbreite noch weiter reduziert wird. Gesonderte Maßnahmen zur Abdichtung des Turms 1 sind aufgrund der minimalen und exakten Fugenausbildung daher ebenfalls nicht erforderlich. Es kann jedoch, um eine Dichtigkeit des Turms in jedem Fall zu gewährleisten, ein Dichtprofil 31 (s. Fig. 5) zwischen den einzelnen Betonfertigteilen 5 vorgesehen werden.

Wie weiterhin in Fig. 4 gezeigt, können die Betonfertigteile 5, 6 an ihren Kontaktflächen 21 eine oder mehrere Ausnehmungen 24, vorliegend Bohrungen, aufweisen. In diese kann ein Dübel, beispielsweise aus Kunststoff (nicht dargestellt), eingesetzt werden, der in das darüberliegende Betonfertigteil 5, 6 eingreift, so dass eine horizontale Verschiebung der Betonfertigteile 5, 6 oder Verdrehung verhindert wird. Anstelle eines Kunststoffdübels kann auch ein anderes Element zur Lage- oder Verdrehsicherung aus verschiedensten Materialien eingesetzt werden. Eine besonders gute Fixierung der einzelnen Betonfertigteile 5, 6 zueinander kann erreicht werden, wenn, wie vorliegend gezeigt, mehrere Dübel bzw. mehrere Ausnehmungen 24 über den Umfang des Betonfertigteils 5, 6 verteilt angeordnet sind.

Fig. 5 zeigt ein Betonfertigteil 5, welches neben den Ausnehmungen 24 eine Ringnut 30 für ein Dichtprofil 31 aufweist. Das Aufeinandersetzen der einzelnen Betonfertigteile 5 am Einbauort wird hierdurch erleichtert. Das Dichtprofil 31 kann bereits im Fertigteilwerk in die Ringnut 30 eingesetzt und dort fixiert werden. Die schnelle Montage des Turms 1 auf der Baustelle wird hierdurch weiter unterstützt.

Besonders vorteilhaft ist es, dass die Ausnehmungen 24, die Ringnut 30 und ggf. weitere Bearbeitungen ebenfalls in derselben Aufspannung eingearbeitet werden können und somit hochgenaue Betonfertigteile 5 hergestellt werden können. Dadurch, dass sämtliche Bearbeitungsschritte nach dem Gießen in einer einzigen Bearbeitungsstation 27 vorgenommen werden können, können die Fertigteile 5 trotz der hochgenauen Ausführung sehr rationell hergestellt werden. Wie in Fig. 2 weiterhin ersichtlich, beinhaltet die Bearbeitungsstation 27 ein berührungsloses Messsystem 36, so dass fehlerhafte Betonfertigteile 5 bereits im Fertigteilwerk ausgesondert werden können.

Bestehen die ringförmigen Betonfertigteile 5 aus zwei oder mehreren Ringsegmenten 6, wie in Fig. 1 oder Fig. 4 gezeigt, so werden diese vor dem Schleifprozess zu ringförmigen Fertigteilen zusammengesetzt und ebenso wie diese überarbeitet. Nach dem Überschleifen der Kontaktflächen 21 und ggf. weiteren Bearbeitungsschritten werden die Ringsegmente 6 wieder voneinander gelöst, um eine für den Straßentransport zulässige Größe zu erreichen.

Die vertikalen Kontaktfugen 23 zwischen den einzelnen Ringsegmenten 6 werden schließlich auf der Baustelle am Boden vergossen, so dass stabile ringförmige Betonfertigteile 5 entstehen. Da lediglich ein sehr kleiner Bereich vergossen werden muss, führt dies nicht zu Verzögerungen bei der Montage des Turms. Ggf. können die vertikalen Kontaktfugen 23 jedoch ebenfalls trocken ausgeführt werden.

Um die einzelnen Ringsegmente 6 gegeneinander zu fixieren, können im Bereich der vertikalen Kontaktfugen 23 diagonal angeordnete Verschraubungen (nicht dargestellt) vorgesehen werden. Eine Fixierung der Ringsegmente 6 zueinander kann jedoch auch allein durch die Vorspannkraft der Spannglieder 13 sowie einen Versatz der einzelnen Ringsegmente 6 in jedem Ring 5 erreicht werden. Vorliegend liegen die vertikalen Kontaktfugen 23 des folgenden Rings 5 jeweils um 90° versetzt (siehe Fig. 1).

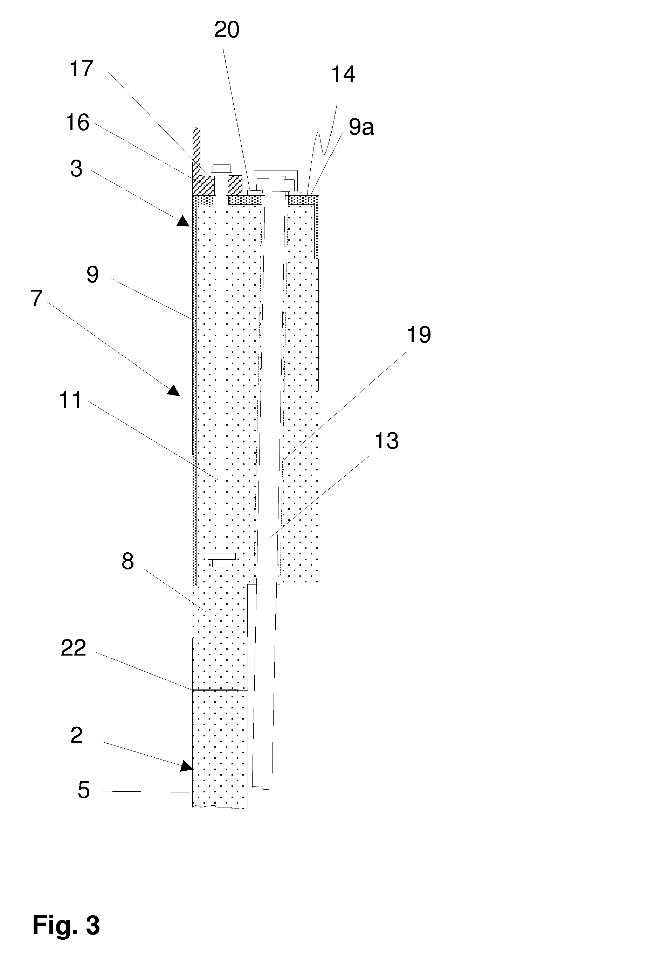

Fig. 3 zeigt eine Ausführung eines Adapterstücks 7 in einer Schnittdarstellung. Das Adapterstück 7 beinhaltet ein inneres ringförmiges Betonelement 8 und ein äußeres ringförmiges Stahlelement 9, welches an seinem in Einbaulage oberen Ende einen nach innen weisenden ringförmigen Flansch 9a aufweist. Besonders vorteilhaft ist es, wenn, wie hier dargestellt, das Stahlelement 9 im Querschnitt im Wesentlichen U-förmig ausgebildet ist, so dass es den oberen Bereich des Betonelements 8 umgreift. Hierdurch kann eine besonders gute Verbindung zwischen dem Betonelement 8 und dem Stahlelement 9 und eine besonders gute Belastbarkeit des Betonelements 8 hergestellt werden.

Wie weiterhin aus Fig. 3 ersichtlich, sind in dem Betonelement 8 des Adapterstücks 7 eine Vielzahl von vorliegend senkrecht orientierten Ankerbolzen 11 eingegossen. Vorliegend sind die Ankerbolzen 11 durch entsprechende Bohrungen 10 des Flansches 9a geführt und überragen die Oberseite 14 des Adapterstücks. Bei der späteren Montage des Turms 1 muss somit nur noch der Turmabschnitt 3 aus Stahl, welcher in seinem Fußbereich einen Befestigungsflansch 16 mit einer Vielzahl von über den Umfang verteilten Befestigungsbohrungen 17 aufweist, über die Ankerbolzen geführt werden und kann dann befestigt werden. Die Ankerbolzen 11 können mit einem Trennmittel versehen sein, so dass diese nicht direkt mit dem Betonelement 8 verbunden sind und wieder demontiert werden können. Hierdurch ist eine spätere Demontage des Turms 1 oder ein Austausch der Ankerbolzen 11 bei einer Wartung möglich. Ebenso können die Ankerbolzen 11 auch in einem Hüllrohr vergossen sein, um Demontage und Austausch zu ermöglichen.

Wie weiterhin in Fig. 3 ersichtlich, weist der Flansch 9a des Adapterstücks 7 eine Vielzahl von Öffnungen 12 zur Festlegung von Spanngliedern 13 auf. Weiterhin sind in dem Betonelement 8 des Adapterstücks 7 Hüllrohre 19 eingegossen, so dass eine nachträgliche Verspannung der Betonfertigteile 6 in günstiger Weise möglich ist. Die Spannglieder 13 werden hierzu durch die Hüllrohe 19 in dem Betonelement 8 und die Öffnungen 12 in dem Flansch 9a hindurchgeführt und an der Oberseite 14 des Flansches 9a festgelegt. Vorliegend sind die Spannglieder 13 ohne Ankerplatte direkt auf dem Flansch 9a festgelegt. Lediglich bei einem schrägen Verlauf der Spannglieder 13 wird, wie hier gezeigt, eine Keilplatte 20 untergelegt. Durch die erfindungsgemäße Ausgestaltung des Flansches 9a, welcher in besonders guter Weise mit dem Betonelement 8 verbunden ist, kann dieser zugleich die Funktion einer Lastverteilplatte übernehmen.

Das Adapterelement 7 weist an seinem in Einbaulage unteren Ende einen Rezess 21 auf, sodass die Spannglieder lediglich im Bereich des Adapterstücks 7 innerhalb der Wandung des Turms 1 geführt sind und sich ansonsten im Inneren des Turms außerhalb der Wandung bis zu dem Fußabschnitt 4 des Turms 1 erstrecken, wo sie ebenfalls verankert sind. Zur Führung der Spannglieder 13 kann es jedoch auch vorgesehen sein, diese in bestimmten Abständen entlang der Höhe des Turms mittels geeigneter Befestigungselemente oder Führungselemente zu befestigen oder zumindest zu führen. Anstelle der hier gezeigten Verspannung mittels externer Spannglieder 13 kann die Vorspannung auf den Turmabschnitt aus Beton 2 selbstverständlich auch mittels im Betonquerschnitt liegender Spannglieder 13 aufgebracht werden.

Die Erfindung ist nicht auf die dargestellten Ausführungsbeispiele beschränkt. Abwandlungen und Kombinationen fallen ebenfalls unter die Erfindung.

## Patentansprüche

1. Verfahren zur Herstellung eines Turms (1), insbesondere eines Turms (1) einer Windenergieanlage, bei welchem zumindest ein rohrförmiger Turmabschnitt (2) aus aufeinander angeordneten ringförmigen Betonfertigteilen (5) mit zwei horizontalen Kontaktflächen (21) hergestellt wird, **dadurch gekennzeichnet, dass** die ringförmigen Betonfertigteile (5) nach dem Gießen in einer Bearbeitungsstation (27) im Fertigteilwerk aufgespannt werden und die beiden horizontalen Kontaktflächen (21) der Betonfertigteile (5) in derselben Aufspannung ohne erneute Aufspannung materialabtragend planparallel bearbeitet werden.

2. Verfahren nach dem vorhergehenden Anspruch, **dadurch gekennzeichnet, dass** die ringförmigen Betonfertigteile (5) während der Bearbeitung um ihre vertikale Achse (28) gedreht werden und vorzugsweise in ihrer späteren Einbaulage auf einem Drehtisch (29) bearbeitet werden.

3. Verfahren nach einem der vorhergehenden Ansprüche, **dadurch gekennzeichnet, dass** die horizontalen Kontaktflächen (21) der ringförmigen Betonfertigteile mit einer Parallelitätsabweichung und einer Ebenheitsabweichung von weniger als 0,2 mm überschliffen werden.

4. Verfahren nach einem der vorhergehenden Ansprüche, **dadurch gekennzeichnet, dass** die ringförmigen Betonfertigteile (5) vor dem Überschleifen aus zwei oder mehreren Ringsegmenten (6) zusammengesetzt und gesichert, vorzugsweise miteinander verschraubt oder verbolzt, werden, nach dem Überschleifen für den Transport zum Einbauort wieder in Ringsegmente zerlegt werden und am Einbauort die Ringsegmente wieder zu ringförmigen Betonfertigteilen zusammengesetzt werden und miteinander vergossen und/oder verschraubt werden.

5. Verfahren nach einem der vorhergehenden Ansprüche, **dadurch gekennzeichnet, dass** nach dem Überschleifen in derselben Aufspannung eine Ringnut (30) für ein Dichtprofil (31) in die obere horizontale Kontaktfläche (21) der Betonfertigteile (5) eingearbeitet wird und/oder Ausnehmungen (24), vorzugsweise Zentrierbohrungen, in die beiden horizontalen Kontaktflächen (21) eingearbeitet werden.

6. Verfahren nach Anspruch 5, **dadurch gekennzeichnet, dass** nach dem Überschleifen und/oder nach dem Einarbeiten der Ringnut (30) und/oder der Ausnehmungen (24) die Betonfertigteile (5) mittels eines berührungslosen Messsystems vorzugsweise in derselben Aufspannung vermessen werden.

7. Verfahren nach einem der vorhergehenden Ansprüche, **dadurch gekennzeichnet, dass** am Einbauort die Betonfertigteile (5) aufeinander gesetzt werden und mittels externer Spannglieder trocken gegeneinander verspannt werden.

8. Turm (1), insbesondere für eine Windenergieanlage, mit zumindest einem rohrförmigen Turmabschnitt (2) aus Beton, welcher aus aufeinander angeordneten ringförmigen Betonfertigteilen (5) mit zwei horizontalen Kontaktflächen (21) ausgebildet ist, wobei die beiden horizontalen Kontaktflächen (21) der Betonfertigteile (5) eine Parallelitätsabweichung und eine Ebenheitsabweichung von wenigen Zehntelmillimetern aufweisen, **dadurch gekennzeichnet, dass** die beiden horizontalen Kontaktflächen (21) der Betonfertigteile (5) materialabtragend planparallel überarbeitet sind und dass die Betonfertigteile eine eingegossene oder durch eine Aussparung im Beton gebildete Befestigungsvorrichtung aufweisen.

9. Turm nach dem vorhergehenden Anspruch, **dadurch gekennzeichnet, dass** eine Fuge (32) zwischen zwei aufeinander angeordneten Betonfertigteilen (5) im ungespannten Zustand des Turms (1) eine Breite von weniger als 0,5 mm, vorzugsweise weniger als 0,2 mm, aufweist und dass die Fugen (32) zwischen zwei aufeinander angeordneten Betonfertigteilen (5) vorzugsweise trocken ausgeführt sind.

10. Turm nach einem der beiden vorhergehenden Ansprüche, **dadurch gekennzeichnet, dass** die ringförmigen Betonfertigteile (5) mit einer Parallelitätsabweichung und einer Ebenheitsabweichung von weniger als 0,2 mm überarbeitet sind.

11. Turm nach einem der Ansprüche 8 - 10, **dadurch gekennzeichnet, dass** die Betonfertigteile (5) an ihrer oberen horizontalen Kontaktfläche (21) eine Ringnut (30) für ein Dichtprofil (31) aufweisen.

12. Turm nach einem der Ansprüche 8 - 11, **dadurch gekennzeichnet, dass** die Betonfertigteile (5) an ihren horizontalen Kontaktflächen (21) wenigstens eine Ausnehmung (24), vorzugsweise wenigstens eine Zentrierbohrung aufweisen, in welche ein Element zur Lage- und/oder Verdrehsicherung, insbesondere ein Kunststoffdübel, einsetzbar ist.

13. Turm nach einem der Ansprüche 8 - 12, **dadurch gekennzeichnet, dass** eine horizontale Kontaktfuge (22) zwischen den ringförmigen Betonfertigteilen (5) mittels eines Dichtprofils (31) abgedichtet ist.

14. Turm nach einem der Ansprüche 8 - 13, **dadurch gekennzeichnet, dass** die ringförmigen Betonfertigteile (5) aus zwei oder mehreren Ringsegmenten (6) bestehen.

15. Turm nach einem der Ansprüche 8 - 14, **dadurch gekennzeichnet, dass** die Ringsegmente (6) in horizontaler Richtung mittels diagonal angeordneter Spannelemente, vorzugsweise Schrauben, vorgespannt sind.

## Claims

1. Method for building a tower (1), especially a tower (1) for a wind power plant, in which at least one tubular tower section (2) is made of annular prefabricated concrete parts (5) with two horizontal contact surfaces (21) placed on top of one another, **characterized in that** after pouring, the annular prefabricated concrete parts (5) are clamped in a processing station (27) of the prefabricated parts factory and material is removed from the two horizontal contact surfaces (21) of the prefabricated concrete parts (5) in the same fixture and without a further fixture when they are processed in plane-parallel position.

2. Method according to the preceding claim, **characterized in that** the annular prefabricated concrete parts (5) are rotated around their vertical axis (28) during processing are processed preferably in their subsequent installation position on a revolving table (29).

3. Method according to one of the preceding claims, **characterized in that** the horizontal contact surfaces (21) of the annular prefabricated concrete parts are re-ground with a deviation from parallelism and a deviation from evenness of less than 0.2 mm.

4. Method according to one the preceding claims, **characterized in that** the annular prefabricated concrete parts (5) are composed and secured, by two or several ring segments (6) before re-grinding, preferably screwed or bolted together, and are once again disassembled into ring segments for transportation to the assembly site after re-grinding and are put together once again to become annular prefabricated concrete parts at the assembly site and are cast and/or screwed together.

5. Method according to one of the preceding claims, **characterized in that** after re-grinding in the same fixture, an annular groove (30) for a sealing profile (31) is incorporated into the upper horizontal contact surface (21) of the prefabricated concrete parts (5) and/or recesses (24), preferably centering bore holes, are incorporated into the two horizontal contact surfaces (21).

6. Method according to claim 5, **characterized in that** after re-grinding and/or after incorporating the annular groove (30) and/or the recesses (24), the prefabricated concrete parts (5) are measured by means of a contact-free measuring system, preferably in the same fixture.

7. Method according to one of the preceding claims, **characterized in that** the prefabricated concrete parts (5) are placed on top of one another at the assembly site and braced dry against one another by means of external pre-stressing tendons.

8. Tower (1), especially for a wind power plant, with at least one tubular concrete tower section (2), executed from annular prefabricated concrete parts (5) arranged on top of one another with two horizontal contact surfaces (21), the two horizontal contact surfaces (21) of the prefabricated concrete parts (5) have a parallelism deviation and an evenness deviation of few tenths of a millimeter, **characterized in that** the two horizontal contact surfaces (21) of the prefabricated concrete parts (5) are processed in plane-parallel manner to remove material and that the prefabricated concrete parts have a fastening device that is cast in or formed by a recess in the concrete.

9. Tower according to the preceding claims, **characterized in that** a joint (32) between two prefabricated concrete parts (5) arranged on top of one another has a width of less than 0.5 mm, preferably of less than 0.2 mm, in the non-tensioned state of the tower (1) and that the joints (32) between two prefabricated concrete parts (5) arranged on top of one another are executed in a dry manner.

10. Tower according to one of the two preceding claims, **characterized in that** of the annular prefabricated concrete parts (5) are refinished with a deviation from parallelism and a deviation from evenness of less than 0.2 mm.

11. Tower according to one of the claims 8-10, **characterized in that** the prefabricated concrete parts (5) have an annular groove (30) for a sealing profile (31) on their upper horizontal contact surface (21).

12. Tower according to one of the claims 8-11, **characterized in that** the prefabricated concrete parts (5) have on their horizontal contact surfaces (21) at least one recess (24), preferably at least one centering bore hole, in which an element for fixing position and/or preventing torsion, especially a plastic dowel, can be placed.

13. Tower according to one of the claims 8-12, **characterized in that** a horizontal contact joint (22) between the annular prefabricated concrete parts (5) is sealed by means of a sealing profile (31).

14. Tower according to one of the claims 8-13, **characterized in that** the annular prefabricated concrete parts (5) consist of two or more ring segments (6).

15. Tower according to one of the claims 8-14, **characterized in that** the ring segments (6) are pre-stressed in horizontal direction by means of diagonally arranged pre-stressing tendons, preferably screws.

## Revendications

1. Procédé pour fabriquer une tour (1), en particulier une tour (1) d'un aérogénérateur, dans lequel au moins un segment de tour (2) tubulaire est fabriqué à partir d'éléments préfabriqués en béton (5) annulaires avec deux surfaces de contact (21) horizontales disposés les uns sur les autres, **caractérisé en ce que** les éléments préfabriqués en béton (5) annulaires sont abloqués dans une station d'usinage (27) après la coulée dans l'usine de préfabrication et les deux surfaces de contact (21) horizontales des éléments préfabriqués en béton (5) sont usinées à faces parallèles par enlèvement de matière dans le même ablocage, sans nouvel ablocage.

2. Procédé selon la revendication précédente, **caractérisé en ce que** les éléments préfabriqués en béton annulaires (5) sont pivotés autour de leur axe vertical (28) durant l'usinage et usinés de préférence dans leur position de montage finale sur une table rotative (29).

3. Procédé selon l'une des revendications précédentes, **caractérisé en ce que** les surfaces de contact horizontales (21) des éléments préfabriqués en béton annulaires sont rectifiées avec un écart de parallélisme et un écart de planéité saillie-creux de moins de 0,2 mm.

4. Procédé selon l'une des revendications précédentes, **caractérisé en ce que** les éléments préfabriqués en béton annulaires (5), avant la rectification, sont assemblés et fixés, de préférence vissés ou boulonnés les uns avec les autres à partir de deux ou plusieurs segments annulaires (6), qu'ils sont désassemblés à nouveau après la rectification pour le transport au lieu de montage et, au lieu de transport, les segments annulaires sont à nouveau assemblés en éléments préfabriqués en béton annulaires et scellés et/ou vissés les uns avec les autres.

5. Procédé selon l'une des revendications précédentes, **caractérisé en ce qu'**après la rectification dans le même ablocage, une rainure circulaire (30) pour un profilé d'étanchement (31) est inséré dans la surface de contact horizontale (21) supérieure des éléments préfabriqués en béton (5) et/ou des entailles (24), de préférence des trous de centrage, sont réalisés dans les deux surfaces de contacts horizontales (21).

6. Procédé selon la revendication 5, caractérisé en ce qu'après la rectification et/ou après la réalisation de la rainure circulaire (30) et/ou des entailles (24), les éléments préfabriqués en béton (5) sont mesurés par un système de mesure sans contact, de préférence dans le même ablocage.

7. Procédé selon l'une des revendications précédentes, **caractérisé en ce qu'**au lieu de montage, les éléments préfabriqués en béton (5) sont agencés les uns sur les autres et calés à sec les uns contre les autres à l'aide d'éléments d'armature externes.

8. Tour (1), en particulier pour un aérogénérateur, avec au moins un segment de tour (2) tubulaire en béton, lequel se compose d'éléments (5) préfabriqués en béton annulaires avec deux surfaces de contact (21) horizontales disposés les uns sur les autres, sachant que les deux surfaces de contact horizontales (21) des éléments (5) préfabriqués en béton présentent un écart de parallélisme et un écart de planéité saillie-creux de quelques dixièmes de millimètres, **caractérisée en ce que** les deux surfaces de contact horizontales (21) des éléments (5) préfabriqués en béton sont retravaillées à faces parallèles par enlèvement de matière et que les éléments préfabriqués en béton présentent un dispositif de fixation coulé ou formé par une entaille dans le béton.

9. Tour selon la revendication précédente, caractérisée en ce qu'un joint (32) entre deux éléments (5) préfabriqués en béton disposés l'un sur l'autre, à l'état non serré de la tour (1), présente une largeur de moins de 0,5mm, de préférence de moins de 0,2 mm, et que les joints (32) entre deux éléments (5) préfabriqués en béton disposés l'un sur l'autre sont de préférence réalisés à sec.

10. Tour selon l'une des deux revendications précédentes, **caractérisé en ce que** les éléments (5) préfabriqués en béton annulaires sont retravaillés à un écart de parallélisme et un écart de planéité saillie-creux de moins de 0,2 mm.

11. Tour selon l'une des revendications 8-10, **caractérisée en ce que** les éléments (5) préfabriqués en béton comportent sur leur surface de contact (21) horizontale supérieur une rainure circulaire (30) pour un profilé d'étanchement (31).

12. Tour selon l'une des revendications 8-11, **caractérisée en ce que** les éléments (5) préfabriqués en béton, sur leurs surfaces de contact (21) horizontales, présentent au moins une entaille (24), de préférence un trou de centrage, dans lequel peut être inséré un élément en tant que moyen de fixation de la position et/ou moyen anti-rotation, en particulier une cheville en matière plastique.

13. Tour selon l'une des revendications 8-12, caractérisée en ce qu'un joint de contact horizontal (22) est étanché entre les éléments (5) préfabriqués en béton annulaires d'un profilé d'étanchement (31).

14. Tour selon l'une des revendications 8-13, **caractérisée en ce que** les éléments (5) préfabriqués en béton annulaire se composent de deux ou d'une multitude de segments annulaires (6).

15. Tour selon l'une des revendications 8-14, **caractérisée en ce que** les segments annulaires (6) sont précontraints dans le sens horizontal à l'aide d'éléments de serrage disposés diagonalement, de préférence des vis.
